# EUROPÄISCHE PATENTSCHRIFT

(11) **EP 0 599 044 B1**
(45) Veröffentlichungstag und Bekanntmachung des Hinweises auf die Patenterteilung: **12.08.1998**
(21) Anmeldenummer: 93116741.5
(22) Anmeldetag: 16.10.1993
(51) Int. Cl.: C07F 9/52

(54) **Verfahren zur Herstellung von Chlorphenylphosphanen**
Process for preparing chlorphenyl phosphanes
Procédé de préparation de chiorophényl phosphanes

(30) Priorität: 17.11.1992 DE 4238711
(43) Veröffentlichungstag der Anmeldung: 01.06.1994
(73) Patentinhaber: Clariant GmbH, 65929 Frankfurt am Main (DE)
(72) Erfinder: Scholz, Guido Dr., D-50674 Köln (DE)

(56) Entgegenhaltungen:
- EP-A- 0 093 420

## Beschreibung

Die vorliegende Erfindung betrifft ein Verfahren zur Herstellung von Chlorphenylphosphanen der Formel

(C₆H₅)ₙ PCl₃₋ₙ

worin n = 1 oder 2 ist, durch Umsetzung von Triphenylphosphan (C₆H₅)₃P und Phosphortrichlorid PCl₃ bei Temperaturen oberhalb von 300 °C.

Aus der US-PS 4 521 347 ist ein Verfahren zur Herstellung eines Gemisches von Dichlorphenylphosphan C₆H₅PCl₂ und Chlordiphenylphosphan (C₆H₅)₂ PCl bekannt, bei welchem Triphenylphosphan (C₆H₅)₃P und Phosphortrichlorid PCl₃ bei Temperaturen von 320 bis 700 °C in einem Autoklaven oder in einem in einem elektrischen Ofen befindlichen Quarzrohr umgesetzt werden.

Nachteilig ist bei dem bekannten Verfahren, daß das Reaktionsprodukt weißen Phosphor enthält, durch welchen die destillative Aufarbeitung des Reaktionsproduktes sehr erschwert wird.

Es ist daher Aufgabe der vorliegenden Erfindung, ein Verfahren zur Herstellung von Chlorphenylphosphanen durch Umsetzung von Triphenylphosphan und Phosphortrichlorid bei Temperaturen von oberhalb 300 °C anzugeben, bei welchem das anfallende Reaktionsprodukt frei von weißem Phosphor ist. Das wird erfindungsgemäß dadurch erreicht, daß man flüssiges Triphenylphosphan und gasförmiges Phosphortrichlorid im vorgegebenen molaren Verhältnis am Kopf einer vertikal angeordneten, langgestreckten und beheizten Reaktionszone aufgibt; daß man das am Fuß der Reaktionszone ablaufende Umsetzungsprodukt in eine mit Phosphorpentachlorid beaufschlagte Verweilzone überführt; und daß man das überschüssige Phosphortrichlorid aus dem Reaktionsprodukt durch Beheizen der Verweilzone über eine nachgeschaltete Fraktionierzone abtrennt.

Das Verfahren gemäß der Erfindung kann weiterhin wahlweise auch noch dadurch ausgestaltet sein, daß
a) die Reaktionszone aus einem elektrisch beheizbaren Silicium/Siliciumcarbid-Rohr besteht;
b) die Reaktionszone mindestens teilweise mit einer Schüttung aus körnigem Siliciumcarbid gefüllt ist;
c) das Siliciumcarbid der Schüttung Korngrößen von 2 bis 8 mm, vorzugsweise von 3 bis 6 mm, aufweist;
d) die Reaktionszone im Bereich der Siliciumcarbid-Schüttung Temperaturen von 350 bis 650 °C, vorzugsweise von 500 bis 600 °C, aufweist.

Das nach dem erfindungsgemäßen Verfahren anfallende Reaktionsprodukt enthält offensichtlich deswegen keinen weißen Phosphor, weil er sich mit dem in der Verweilzone befindlichen Phosphorpentachlorid umgesetzt hat.

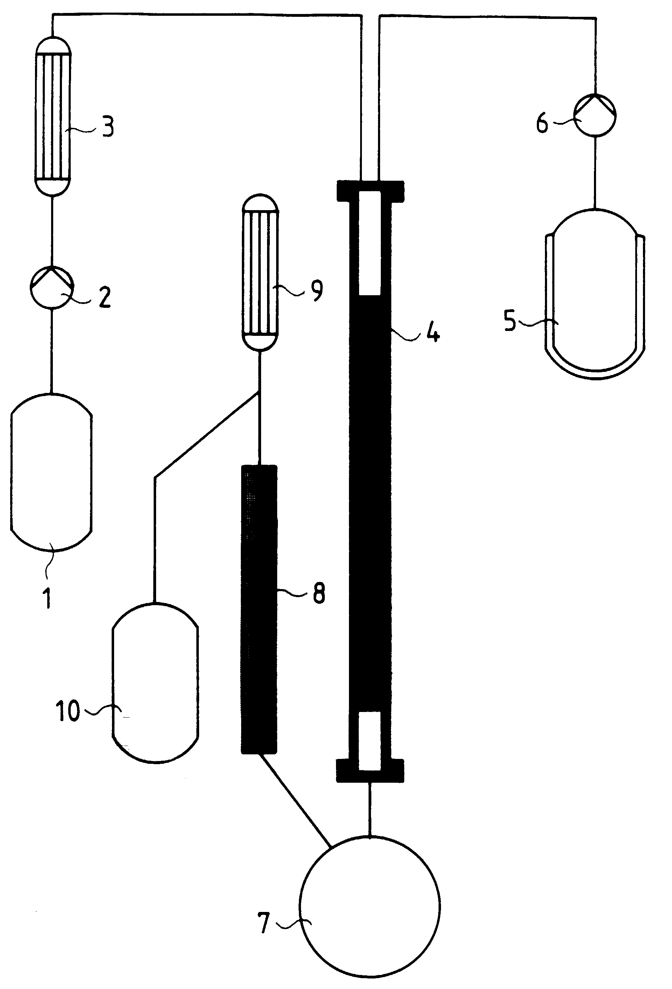

In der beigefügten Zeichnung ist eine Anlage zur Durchführung des Verfahrens gemäß der Erfindung schematisch und im Schnitt dargestellt.

Aus einer Vorlage 1 wird flüssiges Phosphortrichlorid durch eine erste Pumpe 2 einem Verdampfer 3 zugeführt, welcher strömungsmäßig mit dem oberen Ende eines vertikal angeordneten, aus SiSiC bestehenden und elektrisch beheizbaren Rohres 4 verbunden ist. Ebenfalls in das obere Ende dieses Rohres 4, welches mindestens teilweise mit einer Schüttung aus Siliciumcarbid gefüllt ist, wird aus einem mit Heizmantel versehenen Behälter 5 flüssiges Triphenylphosphan über eine zweite Pumpe 6 dosiert. Das aus dem unteren Ende des Rohres 4 ablaufende Reaktionsprodukt gelangt in einen mit einer Heizeinrichtung versehenen Verweilbehälter 7, in welchem sich Phosphorpentachlorid befindet. Der Inhalt des Verweilbehälters 7 wird auf einer Temperatur oberhalb von 80 °C gehalten, wobei das aus dem Verweilbehälter 7 gasförmig abströmende Phosphortrichlorid über eine Kolonne 8 abdestilliert, in einem Kondensator 9 verflüssigt und in einem Tank 10 gesammelt wird.

### Beispiel 1 (Vergleichsbeispiel)

Aus einer Vorlage 1 (vergl. die Figur) wurden mit Hilfe einer ersten Pumpe 2 innerhalb von 3 Stunden 2041 g (14,9 mol) PCl₃ in einen Verdampfer 3 dosiert. Das aus dem Verdampfer 3 abströmende gasförmige PCl₃ gelangte in ein vertikal angeordnetes, aus SiSiC bestehendes und elektrisch auf 590 °C geheiztes Rohr 4, in welchem sich eine Schüttung aus Siliciumcarbid befand. Zu gleicher Zeit wurde aus einem mit Heizmantel versehenen Behälter 5 über eine zweite Pumpe 6 816 g (3,11 mol) flüssiges Ph₃P auf den Kopf des Rohres 4 aufgegeben. Das sich in einem Verweilbehälter 7 sammelnde Reaktionsprodukt wurde darin auf einer Temperatur von mindestens 80°C gehalten, wodurch ein großer Teil des überschüssigen PCl₃ über eine Kolonne 8 abdestillierte, welches in einen Kondensator 9 verflüssigt und in einem Tank 10 gesammelt wurde.

Die Destillation des an PCl₃ abgereicherten Reaktionsproduktes lieferte neben weiterem, nicht umgesetztem PCl₃ folgende Substanzen:

| | |
|---|---|
| 1284 g (7,2 mol) | PhPCl₂ |
| 250 g (1,1 mol) | Ph₂PCl |
| 86,7 g (0,77 mol) | PhCl |
| 3,3 g (27 mmol) | P₄ |
| 37,7 g (144 mol) | Ph₃P |

### Beispiel 2 (Vergleichsbeispiel)

Beispiel 1 wurde mit den Änderungen wiederholt, daß das Rohr 4 elektrisch auf 580°C aufgeheizt war und daß 800 g (3,05 mol) flüsiges Ph₃P auf den Kopf des Rohres 4 aufgegeben wurden.
Die Destillation des an PCl₃ abgereicherten Reaktionsproduktes lieferte neben weiterem, nicht umgesetztem PCl₃ folgende Substanzen:

| | |
|---|---|
| 1189 g (6,6 mol) | PhPCl₂ |
| 261 g (1,2 mol) | Ph₂PCl |
| 64,4 g (0,57 mol) | PhCl |
| 2,2 g (18 mmol) | P₄ |
| 65,8 g (0,25 mol) | Ph₃P |

### Beispiel 3 (Vergleichsbeispiel)

Beispiel 1 wurde mit den Änderungen wiederholt, daß das Rohr 4 elektrisch auf 600°C aufgeheizt war, daß 2905 g (21,2 mol) PCl₃ in den Verdampfer 3 dosiert wurden und daß 504 g (1,92 mol) Ph₃P auf den Kopf des Rohres 4 aufgegeben wurden. Die Destillation des an PCl₃ abgereicherten Reaktionsproduktes lieferte neben weiterem, nicht umgesetztem PCl₃ folgende Substanzen:

| | |
|---|---|
| 690 g (3,9 mol) | PhPCl₂ |
| 46 g (0,21 mol) | Ph₂PCl |
| 86,6 g (0,77 mol) | PhCl |
| 4,3 g (35 mmol) | P₄ |
| < 0,1 g | Ph₃P |

### Beispiel 4 (gemäß der Erfindung)

Beispiel 1 wurde mit den Änderungen wiederholt, daß 2473 g (18,0 mol) PCl₃ mit 965 g (3,68 mol) Ph₃P umgesetzt wurden und daß in dem Verweilbehälter 7 70 g (0,34 mol) PCl₅ (etwa 100 % Überschuß, bezogen auf den durch ³¹P-NMR-Spektroskopie erfaßbaren P₄-Gehalt des Rohgemisches im Verweilbehälter 7) vorgelegt wurden.
Die Destillation des an PCl₃ abegereicherten Reaktionsproduktes lieferte neben weiterem, nicht umgesetztem PCl₃ folgende Substanzen:

| | |
|---|---|
| 1460 g (8,16 mol) | PhPCl₂ |
| 201 g (0,91 mol) | Ph₂PCl |
| 115,1 g (1,02 mol) | PhCl |
| <1 g | P₄ |
| 22,8 g (87 mmol) | Ph₃P |

### Beispiel 5 (gemäß der Erfindung)

Beispiel 1 wurde mit den Änderungen wiederholt, daß 2002 g (14,6 mol) PCl₃ mit 806 g (3,07 mol) Ph₃P umgesetzt wurden und daß in dem Verweilbehälter 7 95 g (0,46 mol) PCl₅ (etwa 150 % Überschuß, bezogen auf den durch ³¹P-NMR-Spektroskopie erfaßbaren P₄-Gehalt des Rohgemisches im Verweilbehälter 7) vorgelegt wurden.
Die Destillation des an PCl₃ abgereicherten Reaktionsproduktes lieferte neben weiterem, nicht umgesetztem PCl₃ folgende Substanzen:

| | |
|---|---|
| 1298 g (7,25 mol) | PhPCl₂ |
| 214 g (0,97 mol) | Ph₂PCl |
| 91,6 g (0,81 mol) | PhCl |
| < 0,1 g | P₄ |
| 37,0 g (141 mmol) | Ph₃P |

## Patentansprüche

1. Verfahren zur Herstellung von Chlorphenylphosphanen der Formel
(C₆H₅)ₙ PCl₃₋ₙ
worin n = 1 oder 2 ist, durch Umsetzung von Triphenylphosphan (C₆H₅)₃P und Phosphortrichlorid PCl₃ bei Temperaturen oberhalb von 300 °C, dadurch gekennzeichnet, daß man flüssiges Triphenylphosphan und gasförmiges Phosphortrichlorid im vorgegebenen molaren Verhältnis am Kopf einer vertikal angeordneten, langgestreckten und beheizten Reaktionszone aufgibt; daß man das am Fuß der Reaktionszone ablaufende Umsetzungsprodukt in eine mit Phosphorpentachlorid beaufschlagte Verweilzone überführt; und daß man das überschüssige Phosphortrichlorid aus dem Reaktionsprodukt durch Beheizen der Verweilzone über eine nachgeschaltete Fraktionierzone abtrennt.

2. Verfahren nach Anspruch 1, dadurch gekennzeichnet, daß die Reaktionszone aus einem elektrisch beheizbaren Silicium/Siliciumcarbid-Rohr besteht.

3. Verfahren nach Anspruch 2, dadurch gekennzeichnet, daß die Reaktionszone mindestens teilweise mit einer Schüttung aus körnigem Siliciumcarbid gefüllt ist.

4. Verfahren nach Anspruch 3, dadurch gekennzeichnet, daß das Siliciumcarbid der Schüttung Korngrößen von 2 bis 8 mm, vorzugsweise von 3 bis 6 mm, aufweist.

5. Verfahren nach mindestens einem der Ansprüche 1 bis 4, dadurch gekennzeichnet, daß die Reaktionszone im Bereich der Siliciumcarbid-Schüttung Temperaturen von 350 bis 650°C, vorzugsweise von 500 bis 600 °C, aufweist.

## Claims

1. A process for the preparation of chlorophenylphosphanes of the formula
(C₆H₅)ₙ PCl₃₋ₙ
in which n is 1 or 2, by reaction of triphenylphosphane (C₆H₅)₃P and phosphorus trichloride PCl₃ at temperatures above 300°C, which comprises introducing liquid triphenylphosphane and gaseous phosphorus trichloride in the given molar ratio at the top of a vertically arranged, elongated and heated reaction zone; transferring the reaction product discharged at the foot of the reaction zone to a residence zone charged with phosphorus pentachloride; and removing the excess phosphorus trichloride from the reaction product, via a subsequent fractionating zone, by heating the residence zone.

2. The process as claimed in claim 1, wherein the reaction zone comprises an electrically heatable silicon/silicon carbide tube.

3. The process as claimed in claim 2, wherein the reaction zone is at least partly filled with a bulk material comprising granular silicon carbide.

4. The process as claimed in claim 3, wherein the silicon carbide of the bulk material has particle sizes of 2 to 8 mm, preferably of 3 to 6 mm.

5. The process as claimed in at least one of claims 1 to 4, wherein the reaction zone in the region of the silicon carbide bulk material has temperatures of 350 to 650°C, preferably of 500 to 600°C.

## Revendications

1. Procédé pour la préparation des chlorophénylphosphanes de formule
C₆H₅)ₙ PCl₃₋ₙ
dans laquelle n = 1 ou 2, par réaction du triphénylphosphane (C₆H₅)₃P et du trichlorure de phosphore PCl₃ à des températures supérieures à 300° C, caractérisé en ce que l'on envoie du triphénylphosphane liquide et du trichlorure de phosphore gazeux à des proportions molaires déterminées en tête d'une zone de réaction verticale allongée et chauffable ; on transfère le produit de réaction sortant du pied de la zone de réaction dans une zone de passage garnie de pentachlorure de phosphore ; et on sépare l'excès de trichlorure de phosphore du produit de réaction par chauffage de la zone de passage et par l'intermédiaire d'une zone de fractionnement placée à la suite.

2. Procédé selon la revendication 1, caractérisé en ce que la zone de réaction consiste en un tube de silicium/carbure de silicium chauffable par l'électricité.

3. Procédé selon la revendication 2, caractérisé en ce que la zone de réaction contient en partie au moins un garnissage de carbure de silicium granuleux.

4. Procédé selon la revendication 3, caractérisé en ce que le carbure de silicium du garnissage est à des dimensions de grains de 2 à 8 mm, de préférence de 3 à 6 mm.

5. Procédé selon au moins une des revendications 1 à 4, caractérisé en ce que la zone de réaction est à des températures de 350 à 650°C, de préférence de 500 à 600°C dans la région du garnissage de carbure de silicium.
